# EUROPÄISCHE PATENTSCHRIFT

(11) **EP 3 310 721 B1**
(45) Veröffentlichungstag und Bekanntmachung des Hinweises auf die Patenterteilung: **18.10.2023**
(21) Anmeldenummer: 16726281.5
(22) Anmeldetag: 01.06.2016
(51) Int. Cl.: C03B 9/36, C03B 9/41

(54) **ANORDNUNG ZUR DARSTELLUNG DES VAKUUMBETRIEBS IM FORMGEBUNGSPROZESS EINER GLASFORMMASCHINE**
ARRANGEMENT FOR REALIZING THE VACUUM OPERATION IN THE MOULDING PROCESS OF A GLASS MOULDING MACHINE
SYSTÈME DE REPRÉSENTATION DU FONCTIONNEMENT SOUS VIDE DANS LE PROCESSUS DE FAÇONNAGE D'UNE MACHINE DE FORMAGE DE VERRE

(30) Priorität: 17.06.2015 DE 102015007695
(43) Veröffentlichungstag der Anmeldung: 25.04.2018
(73) Patentinhaber: Heye International GmbH, 31683 Obernkirchen (DE)
(72) Erfinder: WINKELHAKE, Dirk, 31688 Nienstädt (DE); HARTMANN, Thomas, 31675 Bückeburg (DE); SCHÖTTELNDREIER, Ralf, 31688 Nienstädt (DE)
(74) Vertreter: Michalski Hüttermann & Partner Patentanwälte mbB
(86) Internationale Anmeldenummer: PCT/EP2016/000894
(87) Internationale Veröffentlichungsnummer: WO 2016/202429

(56) Entgegenhaltungen:
- EP-A1- 0 165 012
- EP-A2- 1 466 871
- DE-T2- 60 108 548
- DE-U1- 20 301 676
- DE-U1- 20 301 676
- GB-A- 2 297 548
- US-A- 4 623 375
- US-A- 5 580 366
- US-A1- 2015 013 387
- US-B2- 7 054 710

## Beschreibung

Die Erfindung bezieht sich auf eine Anordnung entsprechend dem Oberbegriff des Anspruchs 1.

Die Herstellung von Hohlglasartikeln in einer Glasformmaschine ausgehend von einer Glasschmelze vollzieht sich über einen Formgebungsprozess, der an einem vorab gebildeten Glastropfen mittels einer der Bildung eines Rohlings dienenden Vorform und einer der Bildung eines Fertigproduktes dienenden Fertigform abgewickelt wird. Der Artikel wird anschließend über eine Absetzplatte auf ein in einen Kühlofen einführendes Förderband überstellt.

Eine Fertigform als Teil einer zur Herstellung von Hohlglasartikeln bestimmten Glasformmaschine ist aus GB 2 297 548 A bekannt und durch einen Blaskopf gekennzeichnet, durch den hindurch eine erste Leitung zur Führung von Blasluft, eine zweite Leitung zur Führung von Abluft und eine dritte Leitung angeordnet ist, die mit einem Drucksensor in Verbindung steht. Im Verlauf der beiden erstgenannten Leitungen sind Proportionalventile angeordnet, die ebenso wie der Drucksensor mit einem Computer in Verbindung stehen, der zur Steuerung der Druckverhältnisse innerhalb des zu formenden Hohlglasartikels eingerichtet ist.

Die Druckschriften US 7 054 710 B2 und US 5 580 366 A offenbaren Allgemeininformationen zum Aufbau einer prozessor- bzw. mikrocomputergestützen Steuerung der Mechanismen einer Glasformmaschine, die für die Abwicklung des gesamten Prozesses der Formgebung bis zur Herstellung eines fertigen Hohlglasartikels eingerichtet ist.

Dieser Prozess ist durch mehrere Stationen gekennzeichnet, deren jeweilige Betriebsparameter mit Hinblick auf ein reproduzierbares Herstellungsergebnis von konstanter Qualität einstellbar sein müssen und zu überwachen sind. Dies gilt für sämtliche den Formgebungsprozess beeinflussende Parameter, insbesondere den Vakuumbetrieb, der beim Ausblasen des Hohlglasartikels in einer Fertigform zum Einsatz kommt und dessen korrekte Betriebsweise bisher nur nach Maßgabe der persönlichen Erfahrung des jeweiligen Betriebspersonals kontrolliert worden ist. Diese Art einer Kontrolle ist jedoch stets mit dem Verlust eines Hohlglasartikels verbunden.

Problematisch ist somit, dass die einwandfreie Funktion des Vakuumbetriebes beim Fertigblasen nicht unmittelbar, sondern erst anhand von fehlerhaften Hohlglasartikeln erkennbar ist. Ein weiteres Problem ist das beim Anlauf einer Maschine häufig auftretende Fertigblasen ohne Glas, welches schädliche Auswirkungen auf den Vakuumbetrieb in seiner Gesamtheit hat und zu fehlerhaften Produkten bei benachbarten Stationen führen kann.

Die Benutzung von Vakuum bei einer Fertigform ist aus der GB 2 297 548 A an sich bekannt.

Aus der US 2015/013387 A1 sind ein Verfahren und eine Vorrichtung zur Regelung der Blas- und Kühlluft einer Glasformmaschine bekannt, wobei die Wandungen einer Fertigform von einem zur Führung von Kühlluft eingerichteten Netzwerk von Leitungen durchzogen sind, die eingangsseitig mit der Umgebung in Verbindung stehen und die ausgangsseitig unter Zwischenanordnung einer elektrisch vorgesteuerten Drossel und einem zur Messung eines Durchflusses sowie dessen Temperatur bestimmten Messsystem an eine Vakuumquelle angeschlossen sind. Es geht hierbei um die Erfassung eines Wärmeentzugs aus den Wandungen und das Vakuum wird hauptsächlich lediglich zur Darstellung eines Luftstromes zur Kühlung der Wandungen der Fertigform benutzt.

Es ist die Aufgabe der vorliegenden Erfindung, eine Anordnung der eingangs bezeichneten Art in einfacher Weise mit Hinblick auf die Erzielung einer verbesserten und gleichförmig reproduzierbaren Produktqualität hin auszugestalten. Gelöst ist diese Aufgabe bei einer solchen Anordnung durch die Merkmale des Kennzeichnungsteils des Anspruchs 1.

Erfindungswesentlich ist, dass die Vakuumleitung an den Bodenbereich der Fertigform angeschlossen ist, hierbei das von einem Külbel nicht ausgefüllte Volumen der Fertigform mit Vakuum beaufschlagend. Es sind eine auf die Ermittlung des aktuellen Vakuums in der Fertigform ausgerichtete Druckmessung und ein zur Auswertung bzw. Umsetzung der gewonnenen Druckmesswerte eingerichteter, mit einer I.S. Maschinensteuerung und mit einem Ventil in der die Fertigform beaufschlagenden Vakuumleitung in Verbindung stehender Mikro-Controller vorgesehen. Die Benutzung eines Mikro-Controllers an dieser Stelle - es kann sich auch um einen Mikroprozesssor handeln - somit eines Einchip-Computersystems eröffnet zahlreiche, durch die Programmierung festgelegte Bearbeitungs- und Auswertemöglichkeiten für die ermittelten Druckmesswerte. Dies betrifft aufgrund der Verbindung mit der I.S. Maschinensteuerung auch Eingriffe in den Prozessablauf der Glasformgebung im Übrigen. Zweckmäßigerweise ist der Vakuumbetrieb einer jeden der mehreren Stationen der Glasformmaschine, insbesondere einer jeden Fertigform individuell überwachbar, so dass eine umfassende Überwachung definierter Zustände des Vakuumbetriebs nach Maßgabe anwenderseitig vorgebbarer Kriterien darstellbar ist, und zwar in einem automatisierbaren Ablauf. Von besonderem Vorteil ist hierbei, dass im Rahmen der so eingerichteten Überwachung des Vakuumbetriebes ein Verlust an Hohlglasartikeln vermieden wird. Der genannte Mikro-Controller ist ferner zur Unterbrechung der Vakuumbeaufschlagung der Fertigformen im Rahmen des Prozesses der Glasformgebung eingerichtet. Der genannte Mikro-Controller ist ferner zur Unterbrechung der Vakuumbeaufschlagung der Fertigformen im Rahmen des Prozesses der Glasformgebung eingerichtet.

Grundsätzlich kann jeder Fertigform ein Mikro-Controller zur Auswertung der ermittelten Druckmesswerte zugeordnet sein. Die Merkmale des Anspruchs 2 sind insoweit auf eine Vereinfachung der Anordnung gerichtet, als zumindest eine primäre Auswertung der erfindungsgemäß ermittelten, den aktuellen Vakuumzustand aller Fertigformen beschreibenden Druckmesswerte in einem Mikro-Controller bzw. Mikroprozessor zusammengefasst ist.

Der Mikro-Controller entsprechend den Merkmalen des Anspruchs 3 bildet über die I.S. Maschinensteuerung das Bindeglied für einen Auswerfer. Ein aufgrund der Vakuumüberwachung als fehlerhaft identifizierter Hohlglasartikel wird somit automatisch verworfen. Die in diesem Mikro-Controller eingerichteten Funktionen können jedoch gleichermaßen auch in den, den Vakuumsensoren zugeordneten Mikro-Controllern abgewickelt werden.

Die Merkmale der Ansprüche 4 und 5 sind auf die weitere Auswertung der ermittelten Druckmesswerte der Fertigformen gerichtet. Hierzu ist ein Computer vorgesehen, der insbesondere zur Auswertung des zeitlichen Verlaufs der Druckmesswerte eingerichtet ist und somit eine frühestmögliche Erkennung von Trends ermöglicht. Hiervon können Maßnahmen einer vorbeugenden Wartung abgeleitet werden - es kann somit eine sich anbahnende Störung rechtzeitig erkannt und gegebenenfalls behoben werden, ohne dass es zu umfangreichen Produktionsausfällen infolge längerer notwendiger Stillstandszeiten kommt.

Über den Computer können entsprechend den Merkmalen des Anspruchs 5 anhand des zeitlichen Verlaufs der Druckmesswerte dem Betriebspersonal visuelle und / oder akustische Informationen über eine erkannte oder eine sich anbahnende Störung vermittelt werden. Auf diesem Wege können gleichzeitig Informationen über die Art der erkannten Störung erstellt werden.

Gemäß den Merkmalen des Anspruchs 6 ist der den Vakuumsensoren zugeordnete Mikro-Controller für ein Erkennen eines Über- und / oder Unterschreitens von Sollwerten des Druckes bzw. des Vakuums eingerichtet und ferner dazu, bei einem Vorliegen dieser Situation, welche das Vorliegen eines fehlerhaften Hohlglasartikels anzeigt, zumindest dem Betriebspersonal einen Hinweis visueller oder akustischer Art zu geben.

Gemäß den Merkmalen des Anspruchs 7 ist die Druck- bzw. Vakuummessung der Fertigform dazu nutzbar, einen anhand dieser Messung als fehlerhaft identifizierten Hohlglasartikel unter Mitwirkung der I.S. Maschinensteuerung auszuwerfen.

Man erkennt anhand der vorstehenden Ausführungen, dass mit der Nutzung des Erfindungsgegenstands bei einer Glasformmaschine, insbesondere einer I.S.-Maschine eine beträchtliche Entlastung des Betriebspersonals darstellbar ist und darüber hinaus ein Beitrag zu einer kontinuierlichen und reproduzierbaren Produktqualität.

Es sind zahlreiche Variationen des Erfindungsgegenstands möglich, wobei insbesondere die über Mikro-Controller abgewickelten Funktionen gleichermaßen über Mikroprozessoren oder einen Computer behandelt werden können.

Die zugrundeliegende Struktur der erfindungsgemäßen Anordnung zur Überwachung eines Vakuumbetriebs ist nicht auf eine Anwendung bei Fertigformen beschränkt und kann sinngemäß in allen Fällen genutzt werden, bei denen örtlich ein Vakuumzustand darzustellen und zu überwachen ist.

Die Erfindung wird im Folgenden unter Bezugnahme auf das in der Zeichnungsfigur 1 dargestellte Ausführungsbeispiel näher erläutert werden.

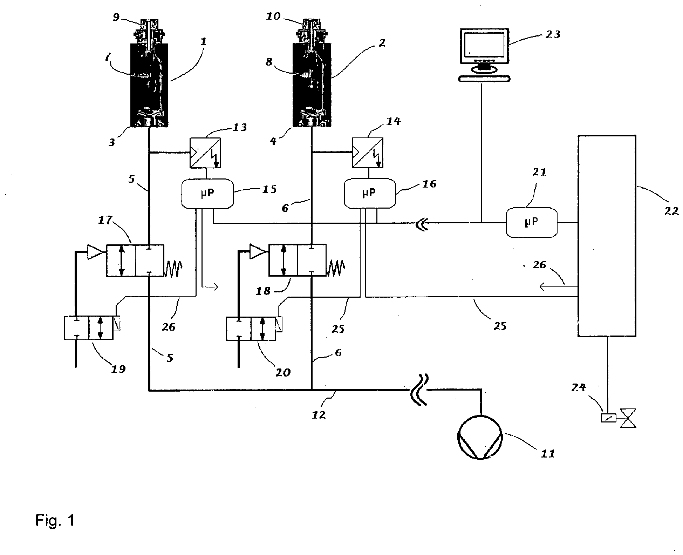

In Fig. 1 sind mit 1, 2 beispielhaft zwei Fertigformen einer I.S. Maschine bezeichnet, an deren jeweilige Bodenbereiche 3, 4 Vakuumleitungen 5, 6 angeschlossen sind. Die Fertigformen bilden einen Teil einer I.S. Maschine und sind zu Beginn des Fertigblasens gezeigt, wobei sich jeweils ein Külbel 7, 8 in diesen befindet und mittels eines Blaskopfes 9, 10 ausgeblasen wird. Hierbei ist das von dem jeweiligen Külbel 7, 8 nicht ausgefüllte Volumen der Fertigform 1, 2 mit Vakuum beaufschlagt.

Mit 11 ist eine Vakuumpumpe bezeichnet, die über eine Sammelleitung 12 mit den Vakuumleitungen 5, 6 der Fertigformen 1, 2 in Verbindung steht.

Mit 13, 14 sind jeweils Vakuumsensoren bezeichnet, die zur Messung des Druckes in den Vakuumleitungen 5, 6 und damit den Fertigformen 1, 2 bestimmt und eingerichtet sind. Sie generieren jeweils ein, den gemessenen Druck darstellendes elektrisches Signal, welches einem Mikro-Controller 15, 16 übertragen wird.

Mit 17, 18 sind im Verlauf der Vakuumleitungen 5, 6 angeordnete Ventile bezeichnet, die jeweils über Vorsteuerventile 19, 20 zwischen einer Öffnungs- und einer Schließstellung schaltbar sind. Die Ventile 17, 18 sind als druckmittelbetätigbare Ventile ausgebildet, deren eine Stellung durch Federkraft gesichert ist. Die Vorsteuerventile 19, 20 sind als elektrisch betätigbare Ventile ausgebildet und stehen mit den Mikro-Controllern 15, 16 über Signalleitungen 25, 26 in Verbindung.

Die Mikro-Controller 15, 16 erfüllen eine mehrfache Aufgabe. Sie dienen im Rahmen des Glasformprozesses durch Ansteuerung der jeweiligen Vorsteuerventile 19, 20 der Beaufschlagung der Fertigformen 1, 2 mit Vakuum bzw. der Trennung von der der Vakuumquelle, hier der Vakuumpumpe. Die Mikro-Controller 15, 16 stehen ausgangsseitig ferner mit einem Computer 23 und über einen weiteren, eine Koppelfunktion erfüllenden Mikro-Controller 21 mit einer LS.-Maschinensteuerung 22 in Verbindung. In der Maschinensteuerung 22 sind sämtliche Steuerungsfunktionen des Glasformgebungsprozesses der mehreren Stationen der Glasformmaschine zusammengefasst.

Den Druckmesswerten kann ein Sollwert bzw. ein Grenzwert des Druckes, hier des Vakuums zugeordnet sein, bei dessen Über- bzw. Unterschreiten, welches ein zu geringes Vakuum signalisiert, der jeweils geformte Hohlglasartikel als fehlerbehaftet identifiziert und daher als Ausschuss auszuwerfen ist. In diesem Fall ergeht über den Mikro-Controller 21 ein Signal an die I.S.-Maschinensteuerung 22, über welche ein einen zeichnerisch nicht dargestellten Auswerfer ansteuerndes Ventil 24 betätigt wird. Vorausgesetzt wird hierbei eine Identifikation des als fehlerhaft festgestellten Hohlglasartikels. Hierauf soll jedoch an dieser Stelle nicht näher eingegangen werden.

Der über die Vakuumsensoren ermittelte Druckmesswert gelangt über die Mikro-Controller 15, 16 auch in den Computer 23 und wird hier einer weiteren Verarbeitung, insbesondere im Zeitablauf unterzogen. Beispielsweise kann hierbei, und zwar bevor ein Über- bzw. Unterschreiten von Grenzwerten des gemessenen Druckes vorliegt, eine Trendanalyse eingerichtet sein, welche Änderungen dieses Messwertes frühzeitig signalisiert, die auf eine sich erst anbahnende Störung hinweisen. Auf diese Weise kann dem Betriebspersonal ein Hinweis gegeben werden, im Sinne einer vorbeugenden Wartung in den Betriebsablauf der Glasformgebung einzugreifen.

Entsprechend der Änderung des gemessenen Druckwertes können dem jeweiligen Bedienungs- und Wartungspersonal auch akustische oder visuelle Informationen vermittelt werden.

### Bezugszeichenliste:

- 1.: Fertigform
- 2.: Fertigform
- 3.: Bodenbereich
- 4.: Bodenbereich
- 5.: Vakuumleitung
- 6.: Vakuumleitung
- 7.: Külbel
- 8.: Külbel
- 9.: Blaskopf
- 10.: Blaskopf
- 11.: Vakuumpumpe
- 12.: Sammelleitung
- 13.: Vakuumsensor
- 14.: Vakuumsensor
- 15.: Mikro-Controller
- 16.: Mikro-Controller
- 17.: Ventil
- 18.: Ventil
- 19.: Vorsteuerventil
- 20.: Vorsteuerventil
- 21.: Mikro-Controller
- 22.: I.S.-Maschinensteuerung
- 23.: Computer
- 24.: Ventil
- 25.: Signalleitung
- 26.: Signalleitung

## Patentansprüche

1. Anordnung zur Einrichtung des Vakuumbetriebes für die, wenigstens eine Fertigform (1, 2) einer I.S. Maschine, mit einer, die Fertigform (1, 2) versorgenden Vakuumleitung (5, 6), die mit einer Vakuumpumpe (11) in Verbindung steht, **dadurch gekennzeichnet, dass** die Vakuumleitung (5, 6) an den Bodenbereich (3, 4) der Fertigform (1,2) angeschlossen ist, hierbei das von einem Külbel (7, 8) nicht ausgefüllte Volumen der Fertigform (1, 2) mit Vakuum beaufschlagend, dass im Verlauf der Vakuumleitung (5, 6) ein Ventil (17, 18) angeordnet ist, dass zur Messung des Druckes in der Fertigform (1, 2) ein Vakuumsensor (13, 14) vorgesehen ist, dass der Vakuumsensor (13, 14) über einen Mikro-Controller (15, 16) mit dem Ventil (17, 18) und einer I.S. Maschinensteuerung (22) in Wirkverbindung steht und dass der Mikro-Controller (15, 16) über das Ventil (17, 18) zur Unterbrechung der Vakuumbeaufschlagung der Fertigform (1, 2) eingerichtet ist.

2. Anordnung nach Anspruch 1, **dadurch gekennzeichnet, dass** die Vakuumsensoren (13, 14) aller Vakuumleitungen (5, 6) mit einem gemeinsamen Mikro-Controller (15, 16) in Verbindung stehen.

3. Anordnung nach Anspruch 1 oder 2, **dadurch gekennzeichnet, dass** der bzw. jeder Mikro-Controller (15, 16) über einen, eine Koppelfunktion erfüllenden Mikro-Controller (21) mit der I.S. Maschinensteuerung (22) in Verbindung steht.

4. Anordnung nach einem der Ansprüche 1 bis 3, **gekennzeichnet durch** einen, zur Auswertung der über den / die Vakuumsensoren (13, 14) ermittelten Druckmesswerte eingerichteten, mit dem Mikro-Controller (15, 16) in Verbindung stehenden Computer (23).

5. Anordnung nach Anspruch 4, **dadurch gekennzeichnet, dass** der Computer (23) ausgehend von dem zeitlichen Verlauf der ermittelten Druckmesswerte zur Erkennung sowie zumindest visuellen Darstellung von anwenderseitig definierbaren Störungszuständen des Vakuumbetriebes eingerichtet ist.

6. Anordnung nach einem der vorangegangenen Ansprüche 1 bis 5, **dadurch gekennzeichnet, dass** der Mikro-Controller (15, 16) ausgehend von den ermittelten Druckmesswerten zur Signalisierung von Unter- und/oder Überschreitung von Sollwerten des Druckes eingerichtet ist.

7. Anordnung nach einem der Ansprüche 1 bis 6, **dadurch gekennzeichnet, dass** der Mikro-Controller (15, 16) ausgehend von den ermittelten Druckmesswerten unter Mitwirkung der I.S. Maschinensteuerung (22) zum Auswurf eines als fehlerhaft erkannten Hohlglasartikels eingerichtet ist.

## Claims

1. An arrangement for realising the vacuum operation for the at least one finished form (1, 2) of an I.S. machine, comprising a vacuum line (5, 6) which supplies the finished form (1, 2) and which is connected to a vacuum pump (11), **characterised in that** the vacuum line (5, 6) is attached to the base region (3, 4) of the finished form (1, 2), here the volume of the finished form (1, 2) which is not filled by a parison (7, 8) being subjected to a vacuum, **in that** a valve (17, 18) is arranged in the course of the vacuum line (5, 6), **in that**, in order to measure the pressure in the finished form (1, 2), a vacuum sensor (13, 14) is provided, **in that** the vacuum sensor (13, 14) is operatively connected via a microcontroller (15, 16) to the valve (17, 18) and an I.S. machine control (22), and **in that** the microcontroller (15, 16) is configured to interrupt, via the valve (17, 18), the application of a vacuum to the finished form (1, 2).

2. The arrangement according to claim 1, **characterised in that** the vacuum sensors (13, 14) of all vacuum lines (5, 6) are connected to a common microcontroller (15, 16).

3. The arrangement according to claim 1 or 2, **characterised in that** the or each microcontroller (15, 16) is connected to the I.S. machine control (22) via a microcontroller (21) fulfilling a coupling function.

4. The arrangement according to any one of claims 1 to 3, **characterised by** a computer (23) which is connected to the microcontroller (15, 16) and is configured to evaluate the pressure measurement values determined via the vacuum sensor(s) (13, 14).

5. The arrangement according to claim 4, **characterised in that** the computer (23) is configured to, on the basis of the temporal course of the determined pressure measurement values, recognise and generate at least a visual representation of user-definable fault conditions of the vacuum operation.

6. The arrangement according to any one of preceding claims 1 to 5, **characterised in that** the microcontroller (15, 16) is configured to, on the basis of the determined pressure measurement values, signal undershooting and/or overshooting of target values of the pressure.

7. The arrangement according to any one of claims 1 to 6, **characterised in that** the microcontroller (15, 16) is configured to, on the basis of the determined pressure measurement values, eject a hollow glass article recognised as faulty, with the assistance of the I.S. machine control (22) .

## Revendications

1. Système de mise en place d'un fonctionnement sous vide pour au moins un moule de finition (1, 2) d'une machine IS, pourvu d'une conduite sous vide (5, 6) alimentant le moule de finition (1, 2) qui est en communication avec une pompe à vide (11), **caractérisé en ce que** la conduite sous vide (5, 6) est raccordée sur une zone de fond (3, 4) du moule de finition (1, 2), créant ainsi le vide dans le volume du moule de finition (1, 2) non occupé par une paraison (7, 8), qu'une soupape (17, 18) est disposée sur le parcours de la conduite sous vide (5, 6), qu'un capteur de vide (13, 14) est prévu dans le moule de finition (1, 2) pour la mesure de la pression, que le capteur de vide (13, 14) est en communication opérationnelle avec la soupape (17, 18) et une commande de machine IS (22) par le biais d'un micro-dispositif de commande (15, 16) et que le micro-dispositif de commande (15, 16) est conçu pour l'interruption de la mise sous vide du moule de finition (1, 2) par le biais de la soupape (17, 18).

2. Système selon la revendication 1, **caractérisé en ce que** les capteurs de vide (13, 14) de toutes les conduites sous vide (5, 6) sont en communication avec un micro-dispositif de commande (15, 16) commun.

3. Système selon la revendication 1 ou la revendication 2, **caractérisé en ce que** le, respectivement chaque, micro-dispositif de commande (15, 16) est en communication avec la commande de machine IS (22) par le biais d'un micro-dispositif de commande (21) jouant le rôle d'une fonction de couplage.

4. Système selon l'une des revendications 1 à 3, **caractérisé par** un ordinateur (23) étant en communication avec le micro-dispositif de commande (15, 16) conçu pour l'exploitation des valeurs de pression déterminées par le biais du Ides capteurs de vide (13, 14) .

5. Système selon la revendication 4, **caractérisé en ce que** l'ordinateur (23) est conçu, en partant de l'évolution dans le temps des valeurs de mesure de pression déterminées, pour la reconnaissance ainsi qu'au moins la représentation visuelle d'états de défaillances du fonctionnement du vide pouvant être définis du côté de l'utilisateur.

6. Système selon l'une des revendications précédentes 1 à 5, **caractérisé en ce que** le micro-dispositif de commande (15, 16), en partant des valeurs de mesure de pression déterminées, est conçu pour signaler des passages en-dessous et/ou au-dessus des valeurs souhaitées de la pression.

7. Système selon l'une des revendications 1 à 6, **caractérisé en ce que** le micro-dispositif de commande (15, 16), en partant des valeurs de mesure de pression déterminées sous l'influence conjointe de la commande de machine IS (22), est conçu pour le rejet d'un article en verre creux reconnu comme défectueux.
